# EUROPEAN PATENT APPLICATION

(11) **EP 4 109 644 A1**
(43) Date of publication of application: **28.12.2022**
(21) Application number: 21756412.9
(22) Date of filing: 04.02.2021
(51) Int. Cl.: H01M 50/20, H01M 50/342

(54) **LITHIUM-ION BATTERY MODULE**

(30) Priority: 18.02.2020 JP 2020025427
(71) Applicant: Asahi Kasei Kabushiki Kaisha, Tokyo 1000006 (JP)
(72) Inventor: KASAI, Tatsuaki, Tokyo 100-0006 (JP)
(74) Representative: D Young & Co LLP
(86) International application number: PCT/JP2021/004169
(87) International publication number: WO 2021/166667

(57) **Abstract**

Provided is a lithium ion battery module that has high safety and that even when runaway occurs, makes it difficult for this runaway to spread to other cells. The lithium ion battery module includes a cell unit including a plurality of cells provided with a rupture valve and a spacer including a recess, wherein the cell unit is covered by the spacer such that the rupture valve and the recess are arranged opposite each other, the recess has a depth of more than 0.5 mm, the spacer contains a resin, and a wall section formed of the spacer is provided between adjacent cells.

## Description

### TECHNICAL FIELD

The present disclosure relates to a lithium ion battery module.

### BACKGROUND

Lithium ion secondary batteries have been increasingly used in electric vehicles and the like in recent years.

One issue faced in the development of lithium ion secondary batteries (LIBs) is strategies for dealing with runaway of LIBs. LIBs are known to expand during charging and discharging and upon unintended damage or the like thereof, and, in the worst case, the contents of the LIB may be spewed out, leading to an explosion when an ignition source is present. Particularly in applications in which LIBs are incorporated in large quantities such as in electric vehicles, it is necessary to ensure that even when runaway of one LIB occurs, this runaway does not spread to other cells (i.e., to prevent an induced explosion).

A lithium ion battery module disclosed in Patent Literature (PTL) 1 is one example of a known lithium ion battery that inhibits LIB runaway. Moreover, a foam for a secondary battery disclosed in PTL 2 is one example of a known material that can prevent spreading of fire even when ignition of an electrolyte occurs.

### CITATION LIST

### Patent Literature

PTL 1: JP2019-91628A
PTL 2: JP2013-241524A

### SUMMARY

### (Technical Problem)

With regards to the lithium ion battery module disclosed in PTL 1, a method is described in which a backflow prevention sheet is arranged on top of an LIB in order that high-temperature gas generated during runaway of an LIB cell does not cause heating of other LIB cells. However, this requires crafting of an intricate shape in the sheet and fundamentally does not enable complete prevention of backflow of high-temperature gas because an opening is present in the sheet.

With regards to the foam for a secondary battery container disclosed in PTL 2, no description is provided in relation to a battery module.

Thus, the current situation is that for lithium ion batteries, there is demand for a battery module that has high safety and that even when runaway occurs, makes it difficult for this runaway to spread to other cells.

Accordingly, an object of the present disclosure is to provide a lithium ion battery module that has high safety and that even when runaway occurs, makes it difficult for this runaway to spread to other cells.

### (Solution to Problem)

Primary features of the present disclosure are as follows.
[1] A lithium ion battery module comprising:
   a cell unit including a plurality of cells provided with a rupture valve; and
   a spacer including a recess, wherein
   the cell unit is covered by the spacer such that the rupture valve and the recess are arranged opposite each other,
   the recess has a depth of more than 0.5 mm,
   the spacer contains a resin, and
   a wall section formed of the spacer is provided between adjacent cells.
[2] The lithium ion battery module according to [1], wherein the resin is a thermoplastic resin.
[3] The lithium ion battery module according to [1] or [2], wherein the recess is open at one surface side of the spacer that is opposite the rupture valve and is closed at another surface side of the spacer.
[4] The lithium ion battery module according to any one of [1] to [3], wherein, in a cross-section cutting through a center of a bottom surface of the recess in a depth direction of the recess, a recess inner surface distance in a direction perpendicular to the depth direction decreases gradually with increasing separation from the rupture valve.
[5] The lithium ion battery module according to any one of [1] to [4], wherein the spacer meets a V-0 rating of standard UL-94.
[6] The lithium ion battery module according to any one of [1] to [5], wherein the spacer is formed of a foam.
[7] The lithium ion battery module according to any one of [1] to [6], wherein the foam is formed of a bead foam.

### (Advantageous Effect)

According to the present disclosure, it is possible to provide a lithium ion battery module that has high safety and that even when runaway occurs, makes it difficult for this runaway to spread to other cells.

### BRIEF DESCRIPTION OF THE DRAWINGS

In the accompanying drawings:
FIG. 1A is a schematic perspective view illustrating one example of a lithium ion battery module of a present embodiment;
FIG. 1B is an X-X cross-sectional view of FIG. 1A (cross-section cutting in depth direction of recess 31);
FIG. 2 is a schematic top view illustrating one example of a cell unit;
FIG. 3 is a schematic perspective view illustrating one example of a bottom surface of a spacer;
FIG. 4 is a schematic view illustrating one example of a positional relationship of a recess and a rupture valve in a lithium ion battery module of a present embodiment;
FIG. 5 is a schematic view illustrating one example of a cross-sectional shape of a recess;
FIG. 6 is a schematic view for describing a measurement method of a vapor guidance effect in examples and comparative examples;
FIG. 7 is a schematic view for describing a measurement method of a vapor guidance effect in examples and comparative examples; and
FIG. 8 is a schematic view for describing a measurement site for length of a heat shrinkage site in evaluation of a vapor guidance effect.

### DETAILED DESCRIPTION

The following provides a detailed description of an embodiment of the present disclosure (referred to as the "present embodiment" in the present specification). The present disclosure is not limited to the following description and can be implemented with various alterations within the essential scope thereof.

The following gives an illustrative description of a lithium ion battery module of the present embodiment with reference to the drawings.

The lithium ion battery module of the present embodiment includes a cell unit including a plurality of cells provided with a rupture valve and a spacer including a recess, wherein the cell unit is covered by the spacer such that the rupture valve and the recess are arranged opposite each other, the recess has a depth of more than 0.5 mm, the spacer contains a resin, and a wall section formed of the spacer is provided between adjacent cells.

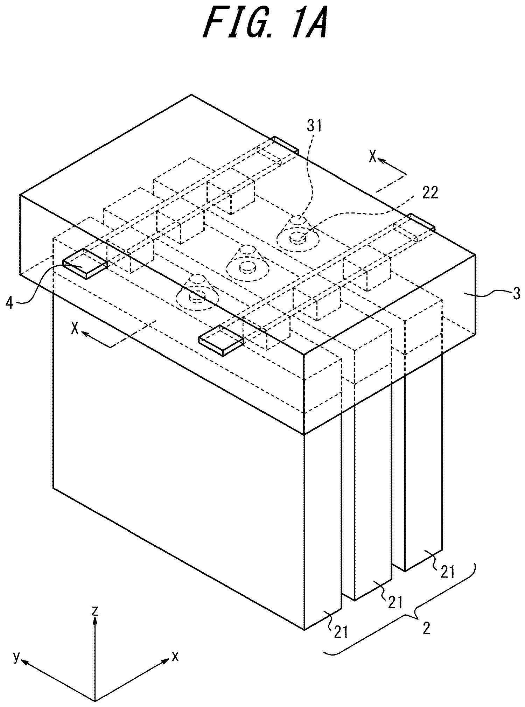

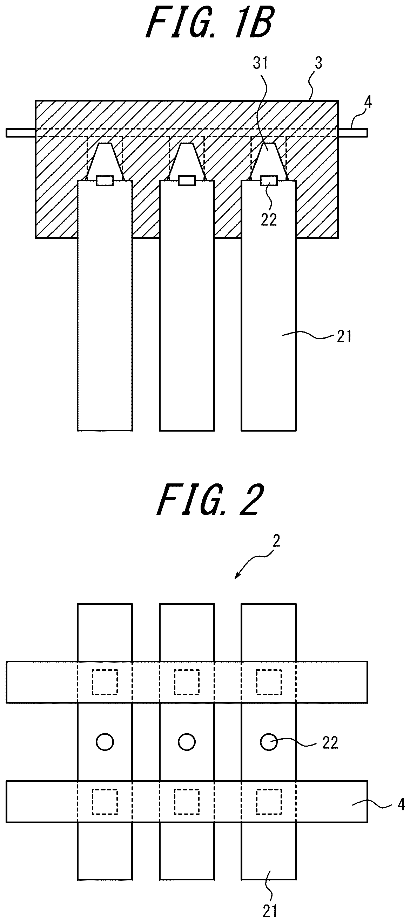

In other words, the lithium ion battery module of the present embodiment includes a stacked structure of cell/wall section (spacer)/cell in an arrangement direction of the cells of the cell unit (FIG. 1). Note that this wall section may be provided at part of a side surface of a cell (FIG. 1A) or may be provided at the entire side surface of a cell. Also note that in a case in which there are a plurality of locations between adjacent cells, a wall section is provided in at least some of these locations between cells, and is preferably provided in every location between cells. Moreover, the size of the wall section may be the same or different for each location between cells.

Note that the lithium ion battery module is also referred to simply as a "module" in the present specification.

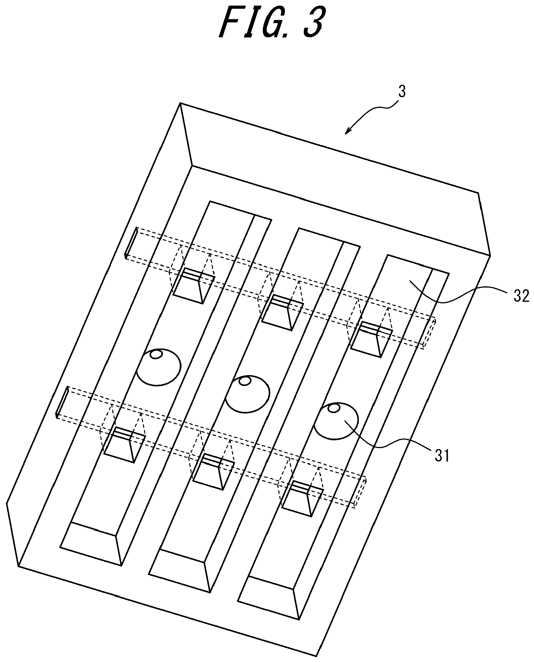

FIG. 1 illustrates one example of the lithium ion battery module 1 of the present embodiment, which includes the aforementioned cell unit 2 and spacer 3. FIG. 2 is a top view of the cell unit 2 in FIG. 1 as viewed from an upper side in a vertical direction and FIG. 3 is a perspective view of the spacer 3 in FIG. 1 as viewed in a direction from a lower side in a vertical direction. In FIGS. 1 to 3, a vertical direction corresponds to the z-direction, an arrangement direction of cells 21, perpendicular to the z-direction, corresponds to the x-direction, and a length direction of the cells 21, perpendicular to the z-direction, corresponds to the y-direction.

The module 1 may have a configuration composed of only the cell unit 2 and the spacer 3 or may have a configuration in which the cell unit 2, the spacer 3, and other optional components are accommodated in an accommodating vessel or the like. Examples of such other components include connectors, plugs, cords, cables, busbars, switches, capacitors, coils, sockets, wiring boards, integrated circuits, control boards, sensors, electric motors, cooling devices, heating devices, and so forth.

### (Cell unit)

The cell unit may include one or more cells 21 (FIGS. 1 and 2).

In a case in which the cell unit includes a plurality of cells 21, each cell may have the same dimensions (FIG. 1) or may have different dimensions. In particular, the same dimensions are preferable from a viewpoint of ease of production of the spacer and cells, from a viewpoint of ease of accommodation in an accommodating vessel, and from a viewpoint of ease of reducing redundant space upon accommodation in an accommodating vessel.

The shape of each cell 21 is not specifically limited and may be a cuboid shape (FIG. 1), a cylindrical shape, a prism shape, or the like. Moreover, a pouch shape in which contents of the cell are laminated by sheets having aluminum as a main material, or the like, may be adopted.

In a case in which a cell 21 has a cuboid shape, the dimensions thereof may, for example, be 1 mm to 200 mm in a width direction (for example, the x-direction in FIG. 1), 1 mm to 500 mm in a length direction (for example, the y-direction in FIG. 1), and 1 mm to 500 mm in a height direction (for example, a vertical direction; z-direction in FIG. 1).

The one or more cells 21 included in the cell unit 2 are provided with a rupture valve 22. Although every cell 21 included in the cell unit 2 may be provided with a rupture valve 22 or just some cells 21 included in the cell unit 2 may be provided with a rupture valve 22, it is preferable that every cell 21 is provided with a rupture valve from a viewpoint of improving the safety of the cell unit.

Note that the term "rupture valve" refers to a valve that is for expelling gas, vapor, or the like to outside of a cell in a situation in which high-pressure gas, vapor, or the like generated inside the cell exceeds a certain pressure. The rupture valve is provided with the aim of preventing pressure increase inside a cell and rupturing of the cell.

The number of rupture valves that are provided in a cell 21 may be one (FIGS. 1 and 2) or may be more than one. In particular, the number of rupture valves is preferably one from a viewpoint of ease of production and from a viewpoint of facilitating melting of a recess upper surface in the spacer that is opposite a cell from which high-temperature vapor, gas, or the like has been expelled.

The position at which the rupture valve 22 of the cell 21 is provided is not specifically limited so long as it is a position where heat, gas, vapor, or the like generated inside the cell is externally released. In particular, it is preferable that the rupture valve 22 is provided at a surface at an upper side of the cell 21 in a vertical direction (for example, the z-direction in FIG. 1) because this facilitates design of a flow path for releasing high-temperature vapor or gas generated during runaway of the cell to outside of the cell (FIGS. 1 and 2).

The number and positioning of rupture valves may be the same or different for each cell 21.

The structure of the rupture valve 22 is preferably a structure that causes gas, vapor, or the like inside the cell to be released to outside of the cell when pressure inside the cell increases.

The shape of the rupture valve 22 is not specifically limited and may, for example, be a roughly circular shape, a roughly polygonal shape, or the like when viewed from an upper side in a vertical direction.

With regards to the dimensions of the rupture valve 22, a longest line segment among line segments joining two outer edges of the shape of the rupture valve 22 as viewed from an upper side in a vertical direction is preferably 100 mm or less, and more preferably 0.1 mm to 50 mm from a viewpoint of making it easier to define a direction in which generated vapor, gas, or the like is to be guided and from a viewpoint of facilitating melting of a recess upper surface in the spacer that is opposite a cell from which high-temperature vapor, gas, or the like has been expelled. The longest line segment may be a diameter in the case of a circle and may be a diagonal in the case of a quadrilateral, for example.

Each cell 21 includes a positive electrode and a negative electrode.

In a case in which a plurality of cells 21 are included, the electrodes of all of the cells 21 may be electrically connected (FIGS. 1 and 2), the electrodes of some of the cells 21 may be electrically connected, or each of the cells 21 may be electrically independent. The electrical connection may, for example, be by a method in which electrodes of cells are connected to one another using a busbar or the like (FIGS. 1 and 2). The material forming the busbar 4 is not specifically limited so long as it is an electrically conductive material and may be aluminum, copper, an alloy containing aluminum and/or copper, or the like, for example.

Adjacent cells 21 in the cell unit 2 may be arranged with an interval therebetween (FIGS. 1 and 2) or may be in contact. In particular, it is preferable that adjacent cells are arranged with an interval therebetween from a viewpoint of inhibiting high-temperature vapor, gas, or the like in a cell 21 that is undergoing runaway from spreading to adjacent cells. Moreover, a spacer or the like may be arranged between cells.

The interval between adjacent cells is preferably 0.01 mm to 50 mm, and more preferably 0.1 mm to 30 mm.

The dimensions of the cell unit 2 can be freely set depending on the number of cells 21, the interval between adjacent cells 21, and so forth. For example, the cell unit 2 may have a width direction dimension (length from one end in the width direction of a cell 21 that is positioned at one end to the other end in the width direction of a cell 21 that is positioned at the other end) of 1 mm to 1,000 mm and may have length direction and height direction dimensions of 1 mm to 500 mm.

### (Spacer)

The spacer 3 is preferably in contact with at least part of a cell 21 included in the cell unit 2, and is more preferably in contact with the cell 21 at at least a bottom surface of a recess from a viewpoint of improving thermal insulation of the cell unit and decreasing cell unit surface in contact with air so as to inhibit condensation and from a viewpoint of facilitating prevention of vapor or gas that can be expelled from a rupture valve during cell runaway being guided in an unintended direction. Moreover, it is more preferable that at least part of a section other than the recess 31 in the spacer 3 (for example, at least part encompassing a surrounding region of the recess bottom surface) and at least part of an upper surface of the cell 21 (for example, a surface where the rupture valve of the cell 21 is provided) are in contact. In particular, from a viewpoint of inhibiting high-temperature vapor, gas, or the like in a cell 21 that is undergoing runaway from spreading to other cells, it is preferable that, with the exception of the recess 31, all of the upper surface of the cell 21 and part of a side surface of the cell 21 are in contact with the spacer 3.

The shape of the spacer 3 is not specifically limited so long as it is a shape that can cover at least some rupture valves 22 of the cell unit 2. In particular, it is preferable that all rupture valves 22 are covered (FIGS. 1 and 3) from a viewpoint of further inhibiting runaway from spreading to adjacent cells.

The spacer 3 preferably at least partially covers a surface of the cell unit 2 in a direction in which a rupture valve 22 of a cell 21 included in the cell unit 2 is present (for example, the z-direction in FIG. 1), more preferably at least partially covers a surface of a cell 21, and even more preferably at least partially covers a side surface of each cell 21 in addition to the aforementioned surface. Moreover, the spacer 3 may cover the entirety of the cell unit. Note that a section where a side surface of a cell 21 and the spacer 3 are in contact is referred to as a wall section. The formation of a wall section makes it easier to prevent high-temperature vapor, gas, or the like from diffusing to surrounding cells from a cell undergoing runaway, and, in particular, the formation of a wall section between all adjacent cells makes it easier to effectively prevent runaway spreading to the surroundings.

In particular, it is preferable that the side surface of each cell 21 is covered from a surface at which the rupture valve 22 is present up to a position that is 1% or more of the vertical direction height (100%) thereof, preferably not less than 5% and not more than 100% of the vertical direction height (100%), and more preferably not less than 10% and not more than 100% of the vertical direction height (100%) (FIGS. 1 and 3) from a viewpoint of being easy to form a structure that inhibits runaway from spreading to adjacent cells, from a viewpoint of reducing the burden of assembly during assembly of the cell unit, and from a viewpoint of making it easier to guide the direction in which vapor, gas, or the like generated during cell runaway is expelled.

Moreover, it is preferable that the spacer at least partially covers an electrode section (FIG. 1) from a viewpoint of covering a region in proximity to an electrode, which has a high tendency to become a cause of shorting when condensation occurs, and thereby improving water-proofing, dust-proofing, and component fixing functionality.

Note that the direction in which a rupture valve 22 is present refers to an upward vertical direction when a surface where a rupture valve provided in a cell 21 is present is taken to be an upper surface.

The spacer 3 preferably has a groove 32 that covers an upper surface and a side surface of each cell 21 (FIG. 3). Such grooves are preferably provided in equal number to the number of cells 21 included in the cell unit 2, and it is also preferable that recesses are provided in the grooves.

The spacer 3 may cover the electrodes of each cell 21 and a busbar 4 that electrically connects the electrodes of the cells 21 (FIGS. 1 and 3). The electrodes of each cell may be covered by the aforementioned groove. Moreover, in a case in which the spacer 3 is formed of a bead foam, a component such as a busbar may be inserted into a mold when performing shaping of the foam so as to perform integral shaping.

The spacer 3 at least includes a recess 31.

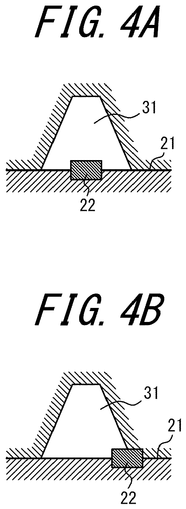

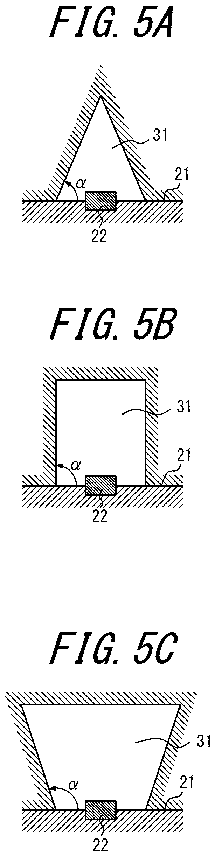

The shape of the recess may be a conical/pyramidal shape such as a circular cone shape or a polygonal pyramid shape, a frustum shape such as a circular frustum shape or a polygonal frustum shape, a cylindrical shape, a prism shape, a spherical shape, or the like, for example. From a viewpoint of making it easier to guide vapor, gas, or the like expelled from a rupture valve in a specific direction (for example, vertically upward), it is preferable that the recess has a shape such that, in a cross-section cutting through a center of a bottom surface of the recess in a depth direction of the recess, a recess inner surface distance in a direction perpendicular to the depth direction decreases gradually with increasing separation from the rupture valve, more preferable that the recess has a conical/pyramidal shape or a frustum shape, and even more preferable that the recess has a roughly circular cone shape or a roughly circular frustum shape (FIGS. 4A, 4B and 5A).

Note that the bottom surface of the recess 31 may, for example, be set as a surface that, among an inner surface of the recess, is a surface surrounded by a section where the spacer 3 and a cell 21 are in contact. For example, in a case in which the recess is a cone, pyramid, or frustum, an opening thereof may be set as the bottom surface, and in a case in which the recess is a through hole, an opening at the rupture valve side thereof may be set as the bottom surface.

The center of the bottom surface of the recess may be the centroid of the bottom surface of the recess. For example, in a case in which the bottom surface of the recess is a circle, the center of the bottom surface may be taken to be the center of the circle, and in a case in which the bottom surface of the recess is a quadrilateral, the center of the bottom surface may be taken to be the intersection of diagonals of the quadrilateral. The depth direction of the recess is preferably a vertical direction. The recess inner surface distance is the distance between two points at the surface of an inner space formed by the recess.

A recess 31 such as described above is arranged at a position opposite the rupture valve 22 of each cell 21.

When the recess 31 is viewed in the depth direction, it is preferable that the recess 31 is positioned such that the bottom surface of the recess encompasses at least part of a surface of the rupture valve 22 (FIGS. 4A and 4B), and it is preferable that the recess 31 is positioned such that the bottom surface of the recess encompasses the entire surface of the rupture valve 22 (FIG. 4A).

Moreover, the position of the recess 31 is preferably a position such that, in a cross-section cutting through the center of the bottom surface of the recess in a vertical direction, the rupture valve 22 is arranged at a position encompassing the center of the recess bottom surface (FIG. 4A).

The depth of the recess 31 is more than 0.5 mm from a viewpoint of facilitating guiding of vapor and from a viewpoint of facilitating prevention of backflow of vapor, gas, or the like, is preferably 1 mm to 50 mm, and is more preferably 2 mm to 40 mm.

The depth of the recess is the longest distance between the bottom surface of the recess and the top of the recess among lengths in a direction perpendicular to the bottom surface. For example, in a case in which a surface where the spacer 3 and the cell unit 2 are in contact is horizontal, the vertical direction length may be adopted. Moreover, in a case in which the recess is a through hole, the longest distance among lengths from one opening of the through hole to the other opening of the through hole in a direction perpendicular to one opening may be adopted. Note that the top of the recess is not necessarily limited to being a single point and may be a plane or the like. For example, the top of the recess is a single point in a case in which the recess shape is a circular cone and is a circle in a case in which the recess shape is a circular frustum.

The volume of the recess 31 is preferably 0.5 mm³ to 400,000 mm³, more preferably 1 mm³ to 200,000 mm³, and even more preferably 10 mm³ to 100,000 mm³ from a viewpoint of facilitating guiding of the direction of vapor, gas, or the like expelled from inside of the cell.

The volume of the recess may be taken to be the volume of a space that is surrounded by the recess bottom surface and the recess inner surface (i.e., an inner space formed by the recess). Note that in a case in which the recess is a through hole, the volume of the recess may be taken to be the volume of a space surrounded by two openings and the recess inner surface.

The shape of the inner surface of the recess 31 from the bottom surface toward the top of the recess (for example, a point at which the depth of the recess is greatest) may be a linear shape (FIGS. 4A, 4B, 5A, 5B and 5C) or may be a curved shape.

Moreover, although the inclination α of the recess inner surface may be any angle, the inclination α in a cross-section cutting through the center of the bottom surface of the recess in a vertical direction is preferably 10° to 170°, more preferably 10° to 90°, and even more preferably 10° to 85° from a viewpoint of further facilitating guiding of vapor, gas, or the like expelled from inside of the cell in a specific direction (for example, vertically upward).

Note that the inclination α is the angle formed between the recess inner surface and the recess bottom surface at a side corresponding to the recess inner space (FIGS. 5A, 5B and 5C).

The top of the recess is preferably positioned vertically upward of the rupture valve from a viewpoint of facilitating melting and/or shrinkage of the top of the recess through vapor, gas, or the like expelled from inside of the cell being directly incident on the top of the recess. Vapor or gas generated during cell runaway may penetrate through the recess through pressure and thus be expelled or may melt/penetrate the recess through heat and thus be expelled. However, since penetration through pressure necessitates an airtight structure, it is preferable to adopt a structure in which penetration is through heat from a viewpoint of not requiring the provision of a special airtight structure.

The recess 31 may be a hole that penetrates through the spacer (for example, a cylindrical through hole, a prism shaped through hole, etc.) or may be an indentation that is only open at one surface of the spacer. Of these structures, a structure in which the recess 31 does not penetrate through the spacer 3 is preferable, and a structure in which the recess 31 is open at one surface side of the spacer 3 that is opposite the rupture valve 22 and is closed at the other surface side of the spacer 3 is more preferable (FIGS. 1B and 3).

A structure in which vapor, gas, or the like expelled from inside of a cell causes melting and/or shrinkage of the spacer at the inner surface of a recess and deformation of the recess to form a through hole so as to enable the release of the expelled vapor, gas, or the like to outside of the spacer is preferable.

For example, each recess 31 may have a structure in which vapor, gas, or the like expelled from inside of a cell causes melting and/or shrinkage of the spacer at the top of the recess and thus in which only a recess where vapor, gas, or the like has been expelled undergoes deformation (for example, deformation to form a through hole or the like). Through this configuration, even in a situation in which one cell undergoes runaway, vapor, gas, or the like can be externally released from the cell undergoing runaway, and sudden temperature rise of the cell unit can be suppressed while also further inhibiting runaway spreading to other cells, and thereby further improving safety.

The vertical direction distance from the top of the recess 31 to a surface at the opposite side of the spacer 3 to the surface thereof that is opposite the cell 21 is preferably 500 mm or less, more preferably 0.5 mm to 500 mm, and even more preferably 1 mm to 100 mm. When this vertical direction length is within any of the ranges set forth above, the recess can more easily deform to form a through hole when vapor of the like is expelled into the recess, the influence on other cells can be reduced through provision of a certain thickness, and safety further improves.

The LIB module including the spacer may include a duct for vapor expulsion that guides vapor, gas, or the like expelled from a cell to outside of the LIB module, and preferably has a structure in which only a recess that has been deformed through expulsion of vapor, gas, or the like is deformed such as to be in communication with the duct. The minimum distance between the recess and the duct is preferably 500 mm or less, more preferably 1 mm to 500 mm, and even more preferably 1 mm to 100 mm.

The spacer 3 described above contains a resin. Moreover, the spacer 3 is preferably formed of a resin composition that contains a resin.

The resin may be a thermoplastic resin such as a polyphenylene ether-based resin, a polystyrene-based resin, a polyolefin-based resin (polyethylene, polypropylene, etc.), a polyamide-based resin, an ABS resin, a vinyl chloridebased resin, an acrylic resin, a (meth)acrylic acid ester-based resin (polymethyl methacrylate, etc.), a fluororesin, a polycarbonate-based resin, an ester-based resin (polyethylene terephthalate, etc.), a polyimide-based resin, or an ethylene-vinyl acetate copolymer; a thermosetting resin such as a phenolic resin, an epoxy resin, a polyurethane, a melamine resin, or a silicone resin; or the like. Of these resins, thermoplastic resins are preferable from a viewpoint of causing deformation of a recess in the spacer through vapor expelled from inside of a cell while also facilitating expulsion of vapor, gas, or the like, and polyethylene, polystyrene, polyphenylene ether, polyamide, polyolefin, polyester, acrylic, and polycarbonate are more preferable.

One of these resins may be used individually, or two or more of these resins may be used in combination. Moreover, different resins may be used for different sections of the spacer. For example, a resin having a low glass-transition temperature may be used for the top of each recess and a resin having a high glass-transition temperature may be used for other sections.

The polyphenylene ether-based resin may be a polymer represented by general formula (1), shown below.

In formula (1), R¹, R², R³, and R⁴ each indicate, independently of one another, a hydrogen, a halogen, an alkyl group having a carbon number of 1 to 20, an alkoxy group having a carbon number of 1 to 20, a phenyl group, or a haloalkyl group or haloalkoxy group having at least two carbon atoms between a halogen and the benzene ring in general formula (1) and not including a tertiary α-carbon. Moreover, n in formula (1) is an integer that represents the degree of polymerization.

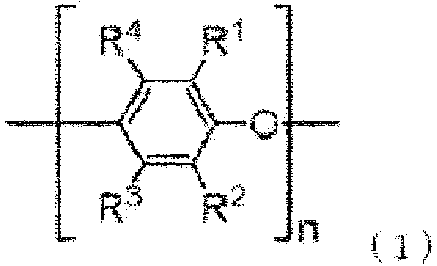

Examples of polyphenylene ether-based resins that may be used include, but are not limited to, poly(2,6-dimethyl-1,4-phenylene) ether, poly(2,6-diethyl-1,4-phenylene) ether, poly(2-methyl-6-ethyl-1,4-phenylene) ether, poly(2-methyl-6-propyl-1,4-phenylene) ether, poly(2,6-dipropyl-1,4-phenylene) ether, poly(2-ethyl-6-propyl-1,4-phenylene) ether, poly(2,6-dibutyl-1,4-phenylene) ether, poly(2,6-dilauryl-1,4-phenylene) ether, poly(2,6-diphenyl-1,4-phenylene) ether, poly(2,6-dimethoxy-1,4-phenylene) ether, poly(2,6-diethoxy-1,4-phenylene) ether, poly(2-methoxy-6-ethoxy-1,4-phenylene) ether, poly(2-ethyl-6-stearyloxy-1,4-phenylene) ether, poly(2,6-dichloro-1,4-phenylene) ether, poly(2-methyl-6-phenyl-1,4-phenylene) ether, poly(2,6-dibenzyl-1,4-phenylene) ether, poly(2-ethoxy-1,4-phenylene) ether, poly(2-chloro-1,4-phenylene) ether, and poly(2,6-dibromo-1,4-phenylene) ether. Of these polyphenylene ether-based resins, those for which R¹ and R² are each an alkyl group having a carbon number of 1 to 4 and R³ and R⁴ are each a hydrogen or an alkyl group having a carbon number of 1 to 4, in particular, are preferable.

One of these polyphenylene ether-based resins may be used individually, or two or more of these polyphenylene ether-based resins may be used in combination.

The weight-average molecular weight (Mw) of the polyphenylene ether-based resin is preferably 20,000 to 60,000.

Note that the weight-average molecular weight (Mw) is the weight-average molecular weight that is determined by performing measurement of the resin by gel permeation chromatography (GPC) and determining the molecular weight of a peak in the chromatogram using a calibration curve that has been determined through measurement of commercially available standard polystyrenes (i.e., prepared using peak molecular weights of the standard polystyrenes).

The polystyrene-based resin is a homopolymer of styrene or a styrene derivative or a copolymer having styrene or a styrene derivative as a main component (component contained in a proportion of 50 mass% or more in the polystyrene-based resin).

The styrene derivative may be o-methylstyrene, m-methylstyrene, p-methylstyrene, t-butylstyrene, α-methylstyrene, β-methylstyrene, diphenylethylene, chlorostyrene, bromostyrene, or the like.

Examples of polystyrene-based resins that are homopolymers include polystyrene, poly(α-methylstyrene), and polychlorostyrene.

Examples of polystyrene-based resins that are copolymers include binary copolymers such as styrene-butadiene copolymer, styrene-acrylonitrile copolymer, styrene-maleic acid copolymer, styrene-maleic anhydride copolymer, styrene-maleimide copolymer, styrene-N-phenylmaleimide copolymer, styrene-N-alkylmaleimide copolymer, styrene-N-alkyl-substituted phenylmaleimide copolymer, styrene-acrylic acid copolymer, styrenemethacrylic acid copolymer, styrene-methyl acrylate copolymer, styrene-methyl methacrylate copolymer, styrene-n-alkyl acrylate copolymer, styrene-n-alkyl methacrylate copolymer, and ethylvinylbenzene-divinylbenzene copolymer; ternary copolymers such as ABS and butadiene-acrylonitrile-α-methylbenzene copolymer; and graft copolymers such as styrene-grafted polyethylene, styrene-grafted ethylene-vinyl acetate copolymer, (styrene-acrylic acid)-grafted polyethylene, and styrene-grafted polyamide.

One of these polystyrene-based resins may be used individually, or two or more of these polystyrene-based resins may be used in combination.

The content of a polystyrene-based resin in the present embodiment is preferably 10 mass% to 80 mass%, and more preferably 20 mass% to 70 mass% relative to 100 mass% of resin component contained in the resin composition.

The polyethylene-based resin may be a resin of high-density polyethylene, low-density polyethylene, linear low-density polyethylene, copolymer of ethylene and an α-olefin, propylene-ethylene copolymer, or the like. These polyethylene-based resins may have a structure that is suitably cross-linked through a cross-linker or the like.

One of these polyethylene-based resins may be used individually, or two or more of these polyethylene-based resins may be used in combination.

The polyamide-based resin may be a polyamide, a polyamide copolymer, or a mixture thereof, for example. The polyamide-based resin may include a polymer obtained through self-condensation of an aminocarboxylic acid, ring-opening polymerization of a lactam, or polycondensation of a diamine and a dicarboxylic acid.

The polyamide may be nylon 66, nylon 610, nylon 612, nylon 46, nylon 1212, or the like that is obtained through polycondensation of a diamine and a dicarboxylic acid, or may be nylon 6, nylon 12, or the like that is obtained through ring-opening polymerization of a lactam.

The polyamide copolymer may be nylon 6/66, nylon 66/6, nylon 66/610, nylon 66/612, nylon 66/6T (T represents a terephthalic acid component), nylon 66/61 (I represents an isophthalic acid component), nylon 6T/6I, or the like, for example.

The mixture of any of these polymers may be a mixture of nylon 66 and nylon 6, a mixture of nylon 66 and nylon 612, a mixture of nylon 66 and nylon 610, a mixture of nylon 66 and nylon 61, a mixture of nylon 66 and nylon 6T, or the like, for example.

One of these polyamide-based resins may be used individually, or two or more of these polyamide-based resins may be used in combination.

The spacer 3 may further contain additives. In other words, the aforementioned resin composition may further contain additives.

Examples of additives that may be used include flame retardants, flame retardant synergists, heat stabilizers, antioxidants, antistatic agents, inorganic fillers, anti-dripping agents, ultraviolet absorbers, light absorbers, plasticizers, mold release agents, dyes/pigments, rubber components, and so forth, and these additives may be added to the extent that the effects disclosed herein are not lost.

The flame retardant may be an organic flame retardant or an inorganic flame retardant, for example.

Examples of organic flame retardants include halogenated compounds, representative examples of which are bromine compounds, and non-halogenated compounds, representative examples of which are phosphorus-based compounds and silicone-based compounds.

Examples of inorganic flame retardants include metal hydroxides, representative examples of which are aluminum hydroxide and magnesium hydroxide, and antimony-based compounds, representative examples of which are antimony trioxide and antimony pentoxide.

One of these flame retardants may be used individually, or two or more of these flame retardants may be used in combination.

Of these flame retardants, non-halogenated flame retardants that are organic flame retardants are preferable from an environmental perspective, with phosphorus-based flame retardants and silicone-based flame retardants being more preferable.

A flame retardant that includes phosphorus or a phosphorus compound can be used as a phosphorus-based flame retardant. The phosphorus may be red phosphorus. The phosphorus compound may be a phosphate ester, a phosphazene compound having a bond between a phosphorus atom and a nitrogen atom in a main chain thereof, or the like.

Examples of phosphate esters that may be used include trimethyl phosphate, triethyl phosphate, tripropyl phosphate, tributyl phosphate, tripentyl phosphate, trihexyl phosphate, tricyclohexyl phosphate, triphenyl phosphate, tricresyl phosphate, trixylenyl phosphate, cresyl diphenyl phosphate, dicresyl phenyl phosphate, dimethyl ethyl phosphate, methyl dibutyl phosphate, ethyl dipropyl phosphate, hydroxyphenyl diphenyl phosphate, and resorcinol bis(diphenyl phosphate). Moreover, phosphate ester compounds of a type obtained through modification of any of the preceding examples with any of various substituents and various condensation-type phosphate ester compounds may be used.

Of these examples, triphenyl phosphate and condensation-type phosphate ester compounds are preferable from viewpoints of heat resistance, flame retardance, and foaming properties.

One of these phosphorus-based flame retardants may be used individually, or two or more of these phosphorus-based flame retardants may be used in combination.

The silicone-based flame retardant may be a (mono or poly)organosiloxane.

Examples of (mono or poly)organosiloxanes include monoorganosiloxanes such as dimethylsiloxane and phenylmethylsiloxane; polydimethylsiloxane and polyphenylmethylsiloxane that are obtained through polymerization of these monoorganosiloxanes; and organopolysiloxanes such as copolymers of these monoorganosiloxanes.

In the case of an organopolysiloxane, a bonding group of a main chain or branched side chain may be a hydrogen, an alkyl group, or a phenyl group, and is preferably a phenyl group, a methyl group, an ethyl group, or a propyl group, but is not limited thereto. Moreover, a terminal bonding group may be a hydroxy group, an alkoxy group, an alkyl group, or a phenyl group.

The form of the silicone may be any form such as an oil form, gum form, varnish form, powder form, or pellet form without any specific limitations.

One of these silicone-based flame retardants may be used individually, or two or more of these silicone-based flame retardants may be used in combination.

Examples of rubber components that may be used include butadiene, isoprene, 1,3-pentadiene, and the like, but are not limited thereto.

Such a rubber component is preferably a component that is dispersed in a particulate form in a continuous phase formed of a polystyrene-based resin.

The method by which any of these rubber components is added may be by adding the rubber component itself or by using a resin such as a styrenebased elastomer or a styrene-butadiene copolymer as a rubber component supply source.

In a case in which a rubber component is added, the content of the rubber component is preferably 15 mass% or less, and more preferably 0.2 mass% to 15 mass% relative to 100 mass% of the resin composition. When the content is 0.2 mass% or more, flexibility and extension of the resin composition are excellent, there is a low tendency for foam cell membranes to rupture, particularly during foaming to obtain a foam, and thus it is easy to obtain a foam having excellent shaping processability and mechanical strength.

Addition of more flame retardant to the resin composition is preferable for improving flame retardance of the spacer, but increasing the additive amount of the flame retardant has a negative influence on foaming properties. In such a situation, a rubber component may suitably be used in order to impart foaming properties to the resin composition. In particular, the rubber component described above is important in bead foaming in which the temperature is gradually increased from normal temperature and in which a resin is foamed in a non-molten state.

The content of additives is preferably 40 mass% or less, and more preferably more than 0 mass% and not more than 30 mass% relative to 100 mass% of the resin composition.

The spacer 3 is preferably formed of a foam (preferably a closed cell foam). When a foam is used, this provides light weight and high thermal insulation and facilitates melting upon coming into contact with vapor or gas of a cell undergoing runaway.

Moreover, the thermal conductivity of the spacer 3 tends to decrease with increasing volume of air contained in the spacer 3. Therefore, even in a situation in which high-temperature vapor, gas, or the like is expelled from one cell, the use of a foam makes it difficult for heat to be transmitted to adjacent cells, and thus further improves safety.

The expansion ratio of the foam is preferably 3.0 cm³/g to 50 cm³/g, more preferably 3.0 cm³/g to 30 cm³/g, and even more preferably 3.0 cm³/g to 25 cm³/g. When the expansion ratio is within any of the ranges set forth above, it tends to be easier to maintain excellent rigidity while exploiting the benefits of light weight and thermal insulation.

Note that the expansion ratio can be measured by a method described in the subsequent EXAMPLES section.

The foam may, for example, be an extrusion foam, an injection foam, a bead foam (foam formed of foam particles), a stretching foam, a solvent extraction foam, or the like, which are respectively foams produced by extrusion foaming, injection foaming, bead foaming, stretch foaming, and solvent extraction foaming described further below.

The production method of the foam may be extrusion foaming, injection foaming, bead foaming (in-mold foaming), stretch foaming, solvent extraction foaming, or the like, for example, without any specific limitations.

Extrusion foaming is a method in which an organic or inorganic blowing agent is pressurized into a molten resin using an extruder and then pressure is released at an outlet of the extruder to obtain a foam in a plate, sheet, or columnar form having a fixed cross-sectional shape.

Injection foaming is a method in which a resin having foaming properties is injection molded and is foamed inside a mold so as to obtain a foam including pores.

Bead foaming (in-mold foaming) is a method in which foam particles are loaded into a mold and are then heated by steam or the like so as to cause expansion of the foam particles and, simultaneously thereto, thermal fusion of the foam particles to one another to thereby obtain a foam.

Stretch foaming is a method in which an additive such as a filler is kneaded into a resin in advance and then the resin is stretched so as to form microvoids and thereby produce a foam.

Solvent extraction foaming is a method in which an additive that dissolves in a specific solvent is added to a resin in advance and then a shaped product is immersed in the specific solvent so as to extract the additive and thereby produce a foam.

In the case of extrusion foaming, the obtained foam has a plate form, sheet form, or the like, and thus a punching step of cutting the foam to a desired shape and a thermal bonding step of bonding the cut-out parts are required in order to process the foam.

In contrast, it is easy to shape a foam into a finer shape or a more complicated shape in the case of bead foaming because a mold of a desired shape can be produced and then foam particles can be loaded into the mold and be shaped. In the case of bead foaming, it is possible for a rib shape or hook shape to be intricately combined in a single foam. This makes it possible for the foam to function not only as a spacer but also as a retainer that fixes the spacer or another component in place in a screwless manner. The adoption of a screwless configuration has effects of simplifying steps and reducing the number of components, and contributes significantly to cost and weight reduction.

Although shaping of a foam with a complicated shape is also possible in the case of injection foaming, it is easier to increase the expansion ratio of the foam and to achieve flexibility in addition to thermal insulation in the case of bead foaming.

The foam is preferably produced by bead foaming and is preferably formed of a bead foam. By performing shaping by bead foaming, it is possible to improve formability of the spacer.

A typically used gas can be used as a blowing agent without any specific limitations.

Examples of blowing agents that may be used include inorganic gases such as air, carbon dioxide gas, nitrogen gas, oxygen gas, ammonia gas, hydrogen gas, argon gas, helium gas, and neon gas; fluorocarbons such as trichlorofluoromethane (R11), dichlorodifluoromethane (R12), chlorodifluoromethane (R22), tetrachlorodifluoroethane (R112), dichlorofluoroethane (R141b), chlorodifluoroethane (R142b), difluoroethane (R152a), HFC-245fa, HFC-236ea, HFC-245ca, and HFC-225ca; saturated hydrocarbons such as propane, n-butane, i-butane, n-pentane, i-pentane, and neopentane; ethers such as dimethyl ether, diethyl ether, methyl ethyl ether, isopropyl ether, n-butyl ether, diisopropyl ether, furan, furfural, 2-methylfuran, tetrahydrofuran, and tetrahydropyran; ketones such as dimethyl ketone, methyl ethyl ketone, diethyl ketone, methyl n-propyl ketone, methyl n-butyl ketone, methyl i-butyl ketone, methyl n-amyl ketone, methyl n-hexyl ketone, ethyl n-propyl ketone, and ethyl n-butyl ketone; alcohols such as methanol, ethanol, propyl alcohol, i-propyl alcohol, butyl alcohol, i-butyl alcohol, and t-butyl alcohol; carboxylic acid esters such as formic acid methyl ester, formic acid ethyl ester, formic acid propyl ester, formic acid butyl ester, formic acid amyl ester, propionic acid methyl ester, and propionic acid ethyl ester; and chlorinated hydrocarbons such as methyl chloride and ethyl chloride.

One of these blowing agents may be used individually, or two or more of these blowing agents may be used in combination.

The blowing agent preferably displays little or no combustibility or combustion support from a viewpoint of flame retardance, and is more preferably an inorganic gas from a viewpoint of gas safety. An inorganic gas has a low tendency to dissolve in a resin compared to an organic gas such as a hydrocarbon and can easily escape from a resin after a foaming step or shaping step, which is beneficial in providing better dimensional stability of the foam over time after shaping. Moreover, in a situation in which an inorganic gas is used, this has a benefit that plasticization of a resin due to residual gas tends not to occur and that excellent heat resistance can be displayed at an earlier stage without going through a step of aging or the like. Of inorganic gases, carbon dioxide gas is preferable from viewpoints of solubility in a resin and ease of handling. Hydrocarbon-based organic gases generally have high combustibility and tend to cause poorer flame retardance when they remain in a foam.

The method by which the foam is processed into a target shape is not specifically limited and may be a method in which foam beads or a molten resin is loaded into a mold and is shaped, a method in which the foam is cut by a blade such as a saw blade or die-cutting blade, a method in which cutting is performed by a mill, or a method in which a plurality of foams are adhered through heating or an adhesive.

The foam may be used individually or may be used in combination with a metal, a non-foamed resin, or the like. In such a case, objects that have each undergone shaping processing may be adhered and then used, or integral shaping may be performed and then the product thereof may be used.

The heat deflection temperature (HDT) of the spacer is preferably 100°C or higher. The heat deflection temperature can be adjusted through the type of resin and the size of the expansion ratio in production. When the heat deflection temperature is 100°C or higher, the spacer has even better heat resistance.

Note that the heat deflection temperature (HDT) can be measured by a method described in the subsequent EXAMPLES section.

The spacer preferably has flame retardance meeting a V-0 rating of standard UL-94. The flame retardance can be adjusted through the type of resin and through the type and content of a flame retardant that is used with the resin. When the spacer has high flame retardance, this means that even supposing a situation in which combustion of the spacer occurs, it is possible to inhibit the spread of this combustion.

Note that the flame retardance according to standard UL-94 can be measured by a method described in the subsequent EXAMPLES section.

The lithium ion battery module 1 of the present embodiment may have a structure that makes it difficult for the spacer 3 to separate from the cell unit 2 in order to inhibit rising up of the spacer 3 from the cell unit 2 when high-temperature vapor, gas, or the like is expelled from the inside of a cell 21. This structure may, for example, be a structure in which the spacer 3 is adhered to the cell unit 2 via an adhesive or the like, a structure in which the spacer 3 is fixed to the cell unit 2 by a screw or the like, or a structure in which the spacer is pressed toward the cell unit.

The lithium ion battery module of the present embodiment can, besides a lithium ion battery, also be used for other articles for which there is the possibility of expulsion of vapor, gas, or the like from inside of a cell.

### EXAMPLES

The following provides a more detailed description of the present disclosure based on examples. However, the present disclosure is not limited by these examples.

Evaluation methods used in the examples and comparative examples are described below.

### (1) Expansion ratio and density

A sample of roughly 30 mm-square and 10 mm in thickness was cut out from part of a spacer described in each of the subsequent examples and comparative examples. The mass W (g) of this sample was measured, a value (V/W) obtained by dividing the sample volume V (cm³) by the mass was taken to be the expansion ratio (cm³/g), and the reciprocal thereof (W/V) was taken to be the density (g/cm³).

Note that in a case in which the cutting described above was difficult, the same material as in each example or comparative example was prepared, the sample mass was measured, the volume was measured by submersion, and then these values were used to calculate the density.

Also note that in a case in which the spacer was not a foam, only the density of the sample was measured.

### (2) Flame retardance

Resins used in production of spacers described in the subsequent examples and comparative examples were each subjected to a test in accordance with the UL-94 vertical method (20 mm vertical flame test) of UL standards (United States of America) so as to evaluate flame retardance (V flame retardance). Note that the resin used in production of a spacer can be identified through analysis by nuclear magnetic resonance spectroscopy, infrared spectroscopy, or the like.

The measurement method is described in detail below.

In the case of a spacer that was formed of a foam, five test specimens of 125 mm in length, 13 mm in width, and 5 mm in thickness were produced through cutting of the foam. In the case of a spacer that was formed of a non-foamed resin, pellets of the resin composition were loaded into a mold and were shaped into the form of a sheet by hot pressing to produce a test specimen of 125 mm in length, 13 mm in width, and 1.6 mm in thickness. Each test specimen was vertically attached to a clamp, a 20 mm flame was twice applied to the test specimen for 10 seconds, and a judgment of V-0, V-1, or V-2 was made based on the burning behavior.
V-0: Flame burning time of both first and second applications is 10 seconds or less, total flame burning time and flameless burning time for second application is 30 seconds or less, total flame burning time for 5 test specimens is 50 seconds or less, no samples burn up to position of fixing clamp, and no ignition of cotton due to burning drippings
V-1: Flame burning time of both first and second applications is 30 seconds or less, total flame burning time and flameless burning time for second application is 60 seconds or less, total flame burning time for 5 test specimens is 250 seconds or less, no samples burn up to position of fixing clamp, and no ignition of cotton due to burning drippings
V-2: Flame burning time of both first and second applications is 30 seconds or less, total flame burning time and flameless burning time for second application is 60 seconds or less, total flame burning time for 5 test specimens is 250 seconds or less, and no samples burn up to position of fixing clamp, but ignition of cotton occurs due to burning drippings

Note that a judgment of "non-conforming" was made in cases that did not correspond to any of V-0, V-1, and V-2.

Moreover, a judgment of "incombustible" was made for cases in which the burning time in the test was 1 second or less.

### (3) Heat deflection temperature (HDT)

Measurement of heat deflection temperature was performed in accordance with ISO 75-1 and 75-2 as described below. First, a sample of 80 mm (length) × 13 mm (width) × 10 mm (thickness) was cut out from a spacer described in each example or comparative example. Next, the sample was set up in an HDT Tester Machine Test (model: 3M-2) produced by Toyo Seiki Seisaku-Sho, Ltd. with a distance between fulcrums of 64 mm. A pressing jig was set up with respect to a central section of the set-up sample, and this setup was immersed in an oil bath in a state in which a pressure of 0.45 MPa was applied. The temperature was subsequently increased at a rate of 120°C/hr, and the sample temperature at a point at which the pressing jig moved to a bending threshold of 0.34 mm was taken to be the heat deflection temperature (°C).

### (4) Vapor guidance effect

Measurement of a vapor guidance effect was performed as follows.

First, a foam or a resin plate that had been produced in accordance with a method described in each example or comparative example was cut out as 10 cm in length by 10 cm in width. Next, a hole of 10 mm in diameter was opened in a rectangular aluminum plate (material: A5052) of 200 mm × 300 mm × 2 mm (thickness) such that the center of the hole was at the intersection point of diagonals. In addition, spacers of 30 mm (length) × 10 mm (width) × 10 mm (thickness) were prepared by cutting from a commercially available aluminum plate (A5052). Moreover, a DS65161K produced by Panasonic was prepared as a replica of a duct for vapor expulsion installed in a typical LIB module.

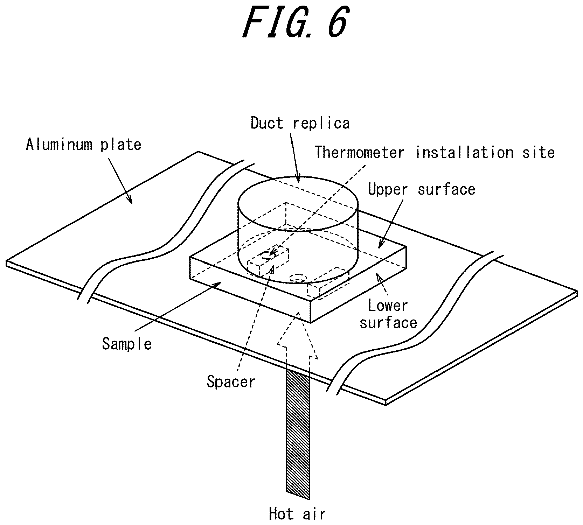

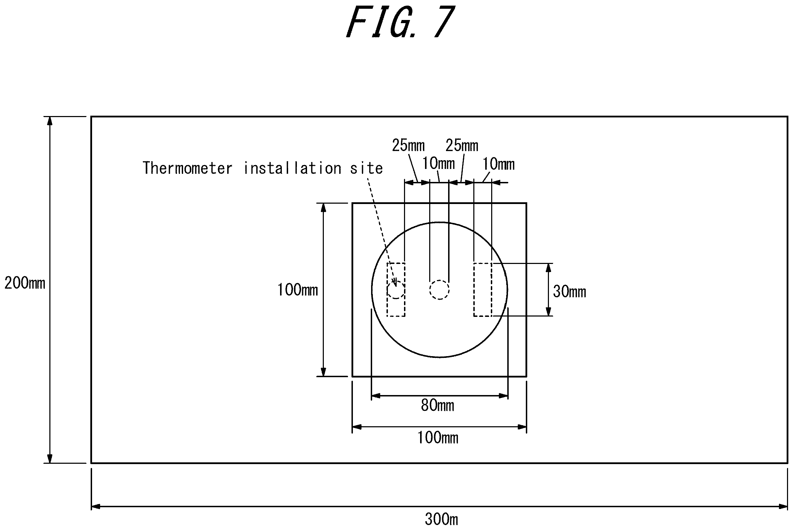

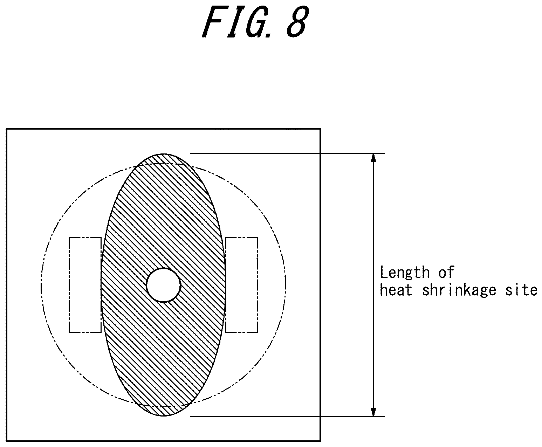

These materials were used to set up the duct replica, the test sample (foam or resin plate described in example or comparative example), the spacers, and the aluminum plate as illustrated in FIG. 6 and FIG. 7. A thermometer was installed on an upper surface of the sample (site illustrated in FIGS. 6 and 7) in order to measure the upper surface temperature. Next, in order to perform a test that simulated vapor, gas, or the like generated during runaway of an LIB cell, a hot air generator was installed at a lower surface of the aluminum plate and was set so as to obtain an air speed of 20.8 m/s and a temperature of 200°C in the hole section of the aluminum plate. Blowing of hot air against the lower surface (test surface) of the sample was continued in this state for 90 seconds, and then the length of a heat shrinkage site at the test surface side of the sample (FIG. 8) and the upper surface temperature after the test were measured in order to judge whether or not a vapor guidance effect was achieved as described below. Note that the heat shrinkage site was visually judged as a site at which shrinkage, deformation, or the like of resin due to heat had occurred. In addition, warping after the test was evaluated as indicated below.

Judgment of vapor guidance effect:
Excellent (vapor guidance effect): Case in which length of heat shrinkage site is less than 75 mm and upper surface temperature is lower than 50°C
Good (slight vapor guidance effect): Case in which length of heat shrinkage site is not less than 75 mm and less than 80 mm or case in which length of heat shrinkage site is less than 75 mm and upper surface temperature is 50°C or higher
Poor (little vapor guidance effect): Case in which length of heat shrinkage site is 80 mm or more

Upper surface temperature:
Good: Maximum value of upper surface temperature during test is lower than 50°C
Poor: Maximum value of upper surface temperature during test is 50°C or higher

Warping:
Good: Average value of distances between corners and flat surface when post-testing sample is placed on flat surface is less than 1 mm
Poor: Average value of distances between corners and flat surface when post-testing sample is placed on flat surface is 1 mm or more

### (Example 1)

After adding together 60 mass% of S201A (produced by Asahi Kasei Corporation) as a polyphenylene ether-based resin (PPE), 15 mass% of bisphenol A bis(diphenyl phosphate) (BBP) as a non-halogenated flame retardant, 10 mass% of high impact polystyrene resin (HIPS) having a rubber concentration of 6 mass%, and 15 mass% of GP685 (produced by PS Japan Corporation) as a general purpose polystyrene resin (PS), these materials were subjected to hot melt-kneading in an extruder and were subsequently extruded so as to produce base resin pellets.

In accordance with a method described in Example 1 of JP-H4-372630A, the resin pellets were loaded into a pressure-resistant vessel, gas inside the vessel was purged with dry air, carbon dioxide (gas) was subsequently injected as a blowing agent, the resin pellets were impregnated with carbon dioxide for 3 hours under conditions of a pressure of 3.0 MPa and a temperature of 10°C, and then the resin pellets were removed from the pressure vessel and were transferred to a foaming furnace where they were subjected to foaming through steam pressurized to a maximum of 330 kPa·G while rotating an impeller at 77 rpm so as to obtain foam particles.

The residual concentration of aliphatic hydrocarbon-based gas in the foam particles straight after foaming was measured but was below the limit of detection (50 ppm). Thereafter, the foam particles were loaded into a vessel and were subjected to pressurization treatment by introducing pressurized air into the vessel (pressure increased to 0.4 MPa over 4 hours and then held at 0.4 MPa for 16 hours).

These foam particles were loaded into an in-mold shaping mold including steam holes after a cooling device had been arranged in the mold and were heated by pressurized steam so as to cause expansion and fusion of the foam particles to one another. Thereafter, cooling was performed, and the resultant product was removed from the shaping mold to obtain a foam spacer formed of foam particles that had the shape illustrated in FIG. 3. Note that recesses each had a circular frustum shape with a recess depth of 5 mm, a circular recess bottom surface of 10 mm in diameter, and a circular recess top of 2 mm in diameter. Also note that the obtained spacer could be formed with the structure illustrated in FIG. 3 without the need for special secondary processing or the like.

A unit in which three cells each including a positive electrode and a negative electrode were arranged and in which electrodes were electrically connected by copper busbars was used as a cell unit. Each of the cells had a size of 120 mm in length, 80 mm in height, and 20 mm in width, and were each provided with one rupture valve at a position including a width direction and length direction center of a surface at an upper side of the cell in a vertical direction. The rupture valves each had a circular shape of 7 mm in diameter as viewed from vertically above. The interval between cells was 10 mm.

When the spacer was placed over the cell unit, grooves in the spacer, with the exception of the recesses, were in contact with the cell unit. The rupture valves and the recesses were arranged opposite one another such that the center of a circle of a rupture valve and the center of a circle of a recess bottom surface overlapped. Moreover, in addition to covering the surface at the upper side of each cell in a vertical direction, the spacer also covered the side surface of each cell up to a position 20 mm in a vertical direction from the surface at the upper side of the cell. The vertical direction distance from the recess bottom surface to a surface at the opposite side of the spacer to a surface opposite the cells was 10 mm.

A foam for use in confirming a vapor guidance effect was produced by a similar method to that described above with a recess shape set as the same shape as for the spacer.

The results of various evaluations performed using the obtained sample are shown in Table 1.

### (Example 2)

A spacer and a foam for vapor guidance effect confirmation were produced in a similar manner to in Example 1 with the exception that the maximum vapor pressure of pressurized steam during production of foam particles from base resin pellets was changed to 260 kPa·G.

### (Example 3)

A foam spacer and a foam for vapor guidance effect confirmation were produced and the previously described evaluations were performed in a similar manner to in Example 1 with the exception that the production step of base resin pellets was changed as described below and that the maximum vapor pressure of pressurized steam during the step of producing foam particles from base resin pellets was changed to 70 kPa·G. The results are shown in Table 1. Base resin pellet production step:
Base resin pellets were produced by hot melt-kneading and subsequently extruding 100 mass% of GP685 (produced by PS Japan Corporation) as a polystyrene-based resin (PS) in an extruder.

### (Example 4)

Foam particles (tertiary foam particles) were obtained by a similar method to a method described in the examples of JP-H4-372630A. The hydrocarbon gas content in the obtained foam particles (tertiary foam particles) straight after foaming was measured but was below the limit of detection (0.01 mass%). The obtained foam particles were shaped by a similar method to in Example 1 to produce a spacer and a foam for vapor guidance effect confirmation, and the previously described evaluations were performed.

### (Example 5)

A foam spacer and a foam for vapor guidance effect confirmation were produced and the previously described evaluations were performed in a similar manner to in Example 4 with the exception that the production step of base resin pellets was changed as described below.

Base resin pellet production step:
Base resin pellets were produced by hot melt-kneading and subsequently extruding 60 mass% of GP685 (produced by PS Japan Corporation) as a polystyrene-based resin (PS) and 40 mass% of S201A (produced by Asahi Kasei Corporation) as a polyphenylene ether-based resin (PPE) in an extruder.

### (Example 6)

After adding together 60 mass% of S201A (produced by Asahi Kasei Corporation) as a polyphenylene ether-based resin (PPE), 15 mass% of bisphenol A bis(diphenyl phosphate) (BBP) as a non-halogenated flame retardant, 10 mass% of high impact polystyrene resin (HIPS) having a rubber concentration of 6 mass%, and 15 mass% of GP685 (produced by PS Japan Corporation) as a general purpose polystyrene resin (PS), these materials were subjected to hot melt-kneading in an extruder and were subsequently extruded so as to produce base resin pellets. The obtained base resin pellets were laid into a formwork and were then hot pressed at a temperature of 270°C to produce a resin plate. Produced plates were stacked using an adhesive to increase the resin plate thickness, and finally cutting thereof was performed to produce a spacer and a resin plate for vapor guidance effect confirmation having the same shape as in Example 1 with the exception that the recess depth was set as 1 mm.

Note that in measurement of density, a sample of 30 mm-square and 10 mm in thickness was cut out from the obtained resin sheet, the mass W (g) of the sample was measured, and a value (W/V) obtained by dividing the mass W by the sample volume V (cm³) was determined as the density (g/cm³).

Also note that in measurement of the HDT, the thickness was changed to 4 mm.

### (Example 7)

A spacer and a foam for vapor guidance effect confirmation were produced in a similar manner to in Example 1 with the exception that the recess position was adjusted such that the distance between a central section of a recess bottom surface and a central section of a rupture valve of an LIB cell was 5 mm (state in which there is a section where an outermost part of the recess bottom surface and the position of the rupture valve overlap) and that the distance between a central section of a recess bottom surface of the foam for vapor guidance effect confirmation and a central section of the hole in the aluminum plate was adjusted to 5 mm.

### (Example 8)

A spacer and a foam for vapor guidance effect confirmation were produced in a similar manner to in Example 1 with the exception that the recess shape was changed to a penetrating structure (cylindrical shape).

### (Example 9)

A foam was produced by the following procedure with reference to JP2006-077218A.

First, low-density polyethylene (PE) (density: 922 kg/m³; MI = 7.0 g/10 min) was supplied to a supply region of a screw-type extruder having a barrel internal diameter of 150 mm at a rate of 900 kg/hr together with 1.2 parts by mass of talc powder (particle diameter: 8.0 µm) as a cell nucleating agent and 0.8 parts by mass of a gas permeation modifier (stearic acid monoglyceride) relative to 100 parts by mass of the resin. The barrel temperature of the extruder was adjusted to 190°C to 210°C, 3 parts by mass of a blowing agent composed of 100 mass% of n-butane was injected from a blowing agent injection port installed at a tip of the extruder relative to 100 parts by mass of the resin, and this blowing agent was mixed with the molten resin composition to obtain a foamable molten mixture.

The foamable molten mixture was cooled to 108°C by a cooling device installed at an outlet of the extruder, was subsequently continuously extruded and foamed in an atmosphere of normal temperature and atmospheric pressure through an orifice plate having an opening shape with an average thickness of approximately 4.0 mm and a width of approximately 226 mm, and was shaped while adjusting the take up rate of resin foam so as to obtain a plate-shaped foam having a thickness of 52 mm, a width of 560 mm, a length of 1,000 mm, and a density of 100 kg/m³. The hydrocarbon gas content in this resin foam was 2.4 mass%. The resin foam was stored in a 40°C environment for 3 months, and, once the hydrocarbon gas content was confirmed to be below the lower limit of detection (0.01 mass%), was cut to produce a spacer and a foam for vapor guidance effect confirmation having a similar shape to in Example 1.

### (Example 10)

A spacer and a foam for vapor guidance effect confirmation were produced in a similar manner to in Example 1 with the exception that the depth of the recess shape was set as 1 mm.

### (Example 11)

A spacer and a foam for vapor guidance effect confirmation were produced in a similar manner to in Example 1 with the exception that the thickness of the foam for vapor guidance effect confirmation was set as 600 mm and the depth of the recess shape was set as 30 mm.

### (Comparative Example 1)

A spacer and a foam for vapor guidance effect confirmation were produced in a similar manner to in Example 1 with the exception that a recess was not formed.

### (Comparative Example 2)

A spacer and a foam for vapor guidance effect confirmation were produced in a similar manner to in Example 1 with the exception that the depth of the recess shape was set as 0.5 mm.

### (Comparative Example 3)

A spacer and a foam for vapor guidance effect confirmation were produced in a similar manner to in Example 1 with the exception that the recess position was adjusted such that the distance between a central section of a recess bottom surface and a central section of a rupture valve of an LIB cell was 15 mm (state in which there is not a section where an outermost part of the recess bottom surface and the position of the rupture valve overlap) and that the distance between a central section of a recess bottom surface in the foam for vapor guidance effect confirmation and a central section of the hole in the aluminum plate was adjusted to 15 mm.

**Table 1**

| | Spacer | | | | | | Evaluation | | | | | |
|---|---|---|---|---|---|---|---|---|---|---|---|---|
| | Presence of recess | Recess shape | Recess depth | Thickness of foam or resin plate | Expansion ratio | Density | F lame retardance | Heat deflection temperature | Vapor guidance effect | Length of heat shrinkage site | Upper surface temperature | Deformation (warping) |
| | - | - | mm | mm | cm³/g | g/cm³ | - | °C | - | mm | - | - |
| Example 1 | Yes | Frustum | 5 | 10 | 10 | 0.1 | V-0 | 104 | Excellent | 70 | Good | Good |
| Example 2 | Yes | Frustum | 5 | 10 | 5 | 0.2 | V-0 | 113 | Excellent | 65 | Good | Good |
| Example 3 | Yes | Frustum | 5 | 10 | 23 | 0.1 | Non-conforming | 92 | Good | 65 | Poor | Good |
| Example 4 | Yes | Frustum | 5 | 10 | 10 | 0.1 | Non-conforming | 38 | Excellent | 70 | Good | Poor |
| Example 5 | Yes | Frustum | 5 | 10 | 10 | 0.1 | Non-conforming | 125 | Excellent | 65 | Good | Good |
| Example 6 | Yes | Frustum | 1 | 10 | - | 1.06 | V-0 | 112 | Excellent | 70 | Good | Good |
| Example 7 | Yes | Frustum | 5 | 10 | 10 | 0.1 | V-0 | 104 | Good | 75 | Good | Good |
| Example 8 | Yes | Cylinder (penetrating) | 10 | 10 | 10 | 0.1 | V-0 | 104 | Good | 20 | Poor | Good |
| Example 9 | Yes | Frustum | 5 | 10 | 10 | 0.1 | Non-conforming | 42 | Excellent | 60 | Good | Poor |
| Example 10 | Yes | Frustum | 1 | 10 | 10 | 0.1 | V-0 | 104 | Good | 75 | Good | Good |
| Example 11 | Yes | Frustum | 30 | 600 | 10 | 0.1 | V-0 | 104 | Excellent | 70 | Good | Good |
| Comparative Example 1 | No | - | - | 10 | 10 | 0.1 | V-0 | 104 | Poor | 85 | Good | Good |
| Comparative Example 2 | Yes | Frustum | 0.5 | 10 | 10 | 0.1 | V-0 | 104 | Poor | 85 | Good | Good |
| Comparative Example 3 | Yes | Frustum | 5 | 10 | 10 | 0.1 | V-0 | 104 | Poor | 80 | Good | Good |

It can be seen from Table 1 that a foam or resin plate for vapor guidance effect confirmation produced by a method described in the examples displays a vapor guidance effect. In other words, it can be seen that when a spacer such as illustrated in FIGS. 1 to 3 is produced, vapor is effectively expelled during LIB cell runaway, and this vapor is inhibited from coming into contact with adjacent cells.

### INDUSTRIAL APPLICABILITY

The lithium ion battery module according to the present disclosure can suitably be used in applications such as electric vehicles due to having high safety and, even when runaway occurs, making it difficult for this runaway to spread to other cells.

### REFERENCE SIGNS LIST

- 1: lithium ion battery module
- 2: cell unit
- 21: cell
- 22: rupture valve
- 3: spacer
- 31: recess
- 32: groove
- 4: busbar

## Claims

1. A lithium ion battery module comprising:
a cell unit including a plurality of cells provided with a rupture valve; and
a spacer including a recess, wherein
the cell unit is covered by the spacer such that the rupture valve and the recess are arranged opposite each other,
the recess has a depth of more than 0.5 mm,
the spacer contains a resin, and
a wall section formed of the spacer is provided between adjacent cells.

2. The lithium ion battery module according to claim 1, wherein the resin is a thermoplastic resin.

3. The lithium ion battery module according to claim 1 or 2, wherein the recess is open at one surface side of the spacer that is opposite the rupture valve and is closed at another surface side of the spacer.

4. The lithium ion battery module according to any one of claims 1 to 3, wherein, in a cross-section cutting through a center of a bottom surface of the recess in a depth direction of the recess, a recess inner surface distance in a direction perpendicular to the depth direction decreases gradually with increasing separation from the rupture valve.

5. The lithium ion battery module according to any one of claims 1 to 4, wherein the spacer meets a V-0 rating of standard UL-94.

6. The lithium ion battery module according to any one of claims 1 to 5, wherein the spacer is formed of a foam.

7. The lithium ion battery module according to any one of claims 1 to 6, wherein the foam is formed of a bead foam.
